# EUROPÄISCHE PATENTANMELDUNG

(11) **EP 1 591 278 A2**
(43) Veröffentlichungstag der Anmeldung: **02.11.2005**
(21) Anmeldenummer: 05102053.5
(22) Anmeldetag: 16.03.2005
(51) Int. Cl.: B60C 23/04

(54) **Verfahren zur Bestimmung von Reifenfülldruckschwankungen bei Fahrzeugen**

(30) Priorität: 29.04.2004 DE 102004021078
(71) Anmelder: Continental Aktiengesellschaft, 30165 Hannover (DE)
(72) Erfinder: Doerr, Alfons, 70597, Stuttgart (DE); Grünberg, Heiko, 31303, Burgdorf (DE); Hoinkhaus, Hermann, 30938, Burgwedel/Fuhrberg (DE); Kutscher, Ulrich, 30657, Hannover (DE)

(57) **Zusammenfassung**

Die Erfindung betrifft ein Verfahren zur Bestimmung von Reifenfülldruckschwankungen bei Fahrzeugen, bei dem Radradienverhältnisse einander zugeordneter Radpositionen zu verschiedenen Zeitpunkten gebildet und mit Referenzwerten verglichen werden, mit den Schritten:
- Ermitteln von Abweichungen der Radradienverhältnisse von einem festgelegten Referenzwert
- mehrfaches Bestimmen der Reifenfülldruckschwankung an allen Radpositionen mit einer Anzahl an Abweichungen, die zu der Anzahl der Radpositionen um Eins vermindert ist durch Variation der Kombination der Abweichungen
- Auswertung sämtlicher Ergebnisse der Reifenfülldruckschwankungen für die jeweilige Radposition.

## Beschreibung

Die Erfindung betrifft ein Verfahren zur Bestimmung von Reifenfülldruckschwankungen bei Fahrzeugen, bei denen Radradienverhältnisse einander zugeordneter Radpositionen zu verschiedenen Zeitpunkten gebildet und mit Referenzwerten verglichen werden.

Es sind Verfahren bekannt, bei denen der Reifendruck an einem Fahrzeug durch Erfassung des dynamischen Abrollumfanges des Reifens überwacht wird. Hierzu sind Raddrehzahlsensoren fahrzeugseitig installiert. Da im Rad oder Reifen selbst keine Sensormodule verbaut werden müssen, handelt es sich bei diesen Verfahren um eine praktikable und kostengünstige Lösung der Reifenfülldrucküberwachung.

Diese Verfahren der Reifenfülldrucküberwachung basieren im allgemeinen auf der Beobachtung unterschiedlicher Radradienverhältnisse bzw. von Funktionen unterschiedlicher Radradienverhältnisse. Infolge des Fahrbetriebes schwanken die Radradienverhältnisse bzw. Funktionen von Radradienverhältnissen aufgrund unterschiedlicher äußerer Einflüsse um einen definierten Wert, den sogenannten Referenzwert. Eine Warnmeldung erfolgt im allgemeinen dann, wenn die Abweichung einzelner Radradienverhältnisse bzw. Funktionen von Radradienverhältnissen vordefmierte Schwellwerte überschreiten.

Wesentlicher Nachteil dieser Verfahren ist, dass eine Vielzahl von Schwellwerten empirisch bestimmt werden müssen. Dadurch ist es nicht möglich, eine robuste Berechnung der Reifenfülldruckschwankungen zu ermöglichen.

Aufgabe der vorliegenden Erfindung ist es, ein Verfahren bereitzustellen, mit dem auf einfache Weise Reifenfülldruckschwankungen mit hoher Robustheit bestimmt werden kann.

Erfindungsgemäß wird diese Aufgabe durch ein Verfahren mit den Merkmalen des Anspruches 1 gelöst, bei dem die Radradienverhältnisse einander zugeordneter Radpositionen zu verschiedenen Zeitpunkten gebildet und mit Referenzwerten verglichen werden. Aufgrund des Vergleiches werden die Abweichungen der Radradienverhältnisse von einem festgelegten Referenzwert ermittelt. Anschließend werden die Reifendruckschwankungen an allen Radpositionen über eine Anzahl von Abweichungen bestimmt, die zu der Anzahl der Radpositionen um 1 vermindert ist. Dieses Bestimmen der Reifendruckschwankung wird mehrfach unter Variation der Kombination der Abweichungen der Radradienverhältnisse von dem Referenzwert durchgeführt. Nachdem die Reifenfülldruckschwankung auf diese Art mehrfach mit einer Anzahl an Abweichungen, die zu der Anzahl der Radposition um 1 vermindert ist, bestimmt worden ist, erfolgt die Auswertung sämtlicher Ergebnisse der Reifenfülldruckschwankungen für die jeweilige Radposition, um aufgrund einer breiteren Datenbasis die Reifenfülldruckschwankungen mit hoher Robustheit bestimmen zu können.

Eine Weiterbildung der Erfindung sieht vor, dass bei einer Anzahl von n Radpositionen (n-1)! Radradienverhältnisse gebildet werden, die auf
n!-fache Weise miteinander kombiniert werden, so dass n!-Ergebnisse der Reifenfülldruckschwankungen ausgewertet werden bzw. werden können.

Eine Weiterbildung der Erfindung sieht vor, dass die Auswertung der Ergebnisse durch eine Mittelwertbildung erfolgt. Die Radradienverhältnisse werden in diskreten Zeitabständen ermittelt, um eine gleichmäßige Grundlage für die Ermittlung der Reifenfülldruckschwankungen zu haben.

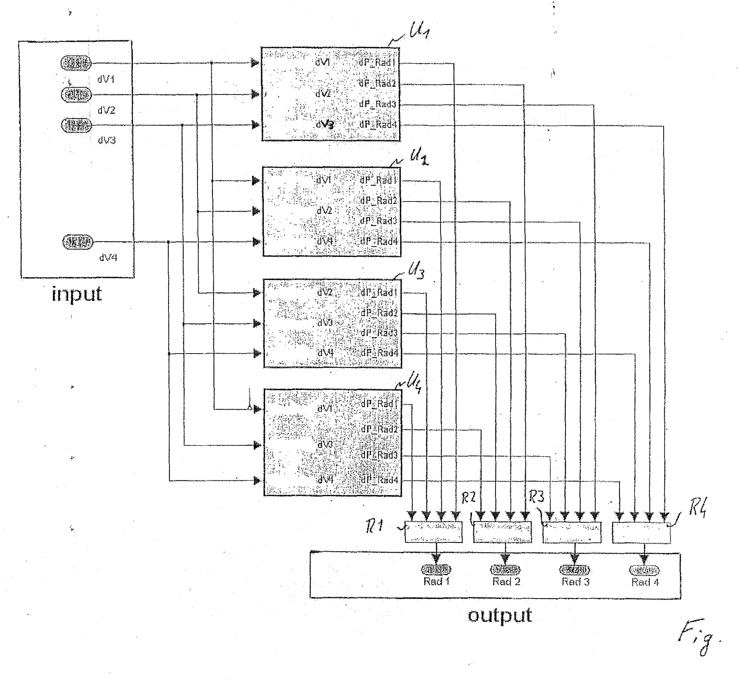

Nachfolgend wird das Ausführungsbeispiel der Erfindung anhand der einzigen Figur näher erläutert.

In der Figur ist schematisch der Verlauf der Bestimmung von eifenfülldruckschwankungen an einem Fahrzeug mit vier Rädern Rad 1, Rad 2, Rad 3, Rad 4, dargestellt. Über nicht dargestellte Radsensoren werden Radradienverhältnisse einander zugeordneter Radpositionen ermittelt. Diese Radradienverhältnisse werden mit einem zuvor bestimmten, vorzugsweise konstanten Referenzwert verglichen. Je nach Maß der Abweichung des Radradienverhältnisses zu dem Referenzwert kann in einem herkömmlichen Verfahren eine Warnmeldung ausgegeben werden.

Die Abweichung des aktuellen Radradienverhältnisses zweier Räder von einem zuvor bestimmten Referenzwert wird mit dV bezeichnet, die daran angefügte Nummer bezeichnet die jeweilige Radposition. Vorliegend wird in dem Verfahren als input ein Fahrzeug mit vier Rädern betrachtet, so dass vier Abweichungen dV1, dV2, dV3, dV4 vorliegen. Aus diesen Abweichungen dV1 - dV4 wird durch die Variation jeweils dreier Abweichungen in vorliegend vier Rechenoperationen die Reifenfülldruckschwankung dP_Rad1 bis dP_Rad4 gebildet. Im Umrechnungsschritt U1 erfolgt dies unter Zugrundelegung der Abweichungen dV1 bis dV3, im Umrechnungsschritt U2 erfolgt dies unter Zugrundelegung der Abweichungen dV1, dV2 und dV4, im Umrechnungsschritt U3 erfolgt dies unter Zugrundelegung der Abweichungen dV2 bis dV4 und im Umrechnungsschritt U4 werden die Reifenfülldruckschwankungen auf Grundlage der Abweichungen dV1, dV3 und dV4 errechnet.

Die in den jeweiligen Umrechnungsschritten U1 bis U4 ermittelten Reifenfülldruckschwankungen für die jeweiligen Radpositionen Rad 1 bis Rad 4 werden jeweils zu der der Radposition Rad 1 bis Rad 4 zugeordneten Auswerteeinheit R1 bis R4 zugeleitet und dort ausgewertet bzw. bewertet. Als Ergebnis oder output steht die Reifenfülldruckschwankung für die jeweilige Radposition Rad 1 bis Rad 4 mit hoher Robustheit fest.

Durch die Verknüpfung von Auswertungen auf Basis unterschiedlicher Radradienverhältnisse ergibt sich eine deutliche Reduzierung unterschiedlicher, zum Teil unbekannter Störfaktoren, die bei einem herkömmlichen Verfahren zur Bestimmung von Reifenfülldruckschwankungen auftreten würden.

Eine mögliche Auswertung der jeweiligen Reifenfülldruckschwankungen kann beispielsweise durch eine Mittelwertbildung in den Auswerteeinheiten R1 bis R4 erfolgen. Durch das vorliegende Verfahren wird die Zahl der benötigten, spezifischen Parameter zur Berechnung der Reifenfülldruckschwankungen in den jeweiligen Radpositionen minimiert.

## Patentansprüche

1. Verfahren zur Bestimmung von Reifenfülldruckschwankungen bei Fahrzeugen, bei dem Radradienverhältnisse einander zugeordneter Radpositionen zu verschiedenen Zeitpunkten gebildet und mit Referenzwerten verglichen werden, mit den Schritten:
- Ermitteln von Abweichungen der Radradienverhältnisse von einem festgelegten Referenzwert
- mehrfaches Bestimmen der Reifenfülldruckschwankung an allen Radpositionen mit einer Anzahl an Abweichungen, die zu der Anzahl der Radpositionen um Eins vermindert ist durch Variation der Kombination der Abweichungen
- Auswertung sämtlicher Ergebnisse der Reifenfülldruckschwankungen für die jeweilige Radposition.

2. Verfahren nach Anspruch 1, **dadurch gekennzeichnet, dass** bei n Radpositionen (n-1)! Radradienverhältnisse gebildet werden, die auf n!-fache Weise miteinander kombiniert werden, so dass n! Ergebnisse der Reifenfülldruckschwankungen ausgewertet werden.

3. Verfahren nach Anspruch 1 oder 2, **dadurch gekennzeichnet, dass** die Auswertung der Ergebnisse durch eine Mittelwertbildung erfolgt.

4. Verfahren nach einem der voranstehenden Ansprüche, **dadurch gekennzeichnet, dass** die Radradienverhältnisse in diskreten Zeitabständen ermittelt werden.
